(19) Europäisches Patentamt
European Patent Office
Office européen des brevets

(11) **EP 3 953 194 B1**

(12) **EUROPÄISCHE PATENTSCHRIFT**

(45) Veröffentlichungstag und Bekanntmachung des Hinweises auf die Patenterteilung:
**07.01.2026 Patentblatt 2026/02**

(21) Anmeldenummer: **20705306.7**

(22) Anmeldetag: **06.02.2020**

(51) Internationale Patentklassifikation (IPC):
**B60D 1/30** (2006.01)  **B60D 1/62** (2006.01)
**B60L 15/38** (2006.01)  **B60T 8/17** (2006.01)
**B60T 8/1755** (2006.01)  **B62D 59/04** (2006.01)

(52) Gemeinsame Patentklassifikation (CPC):
**B60D 1/30; B60D 1/62; B60L 7/00; B60L 15/2036; B60L 15/38; B60T 8/1708; B60T 8/1755; B62D 59/04;** B60L 2200/28; B60L 2220/46; B60L 2240/22; B60L 2240/24; B60L 2240/421; B60L 2240/423; B60L 2240/461;     (Forts.)

(86) Internationale Anmeldenummer:
**PCT/EP2020/053034**

(87) Internationale Veröffentlichungsnummer:
**WO 2020/207638 (15.10.2020 Gazette 2020/42)**

(54) **VERFAHREN ZUR FAHRSTABILISIERUNG EINES ANHÄNGERS**

METHOD FOR DRIVING STABILIZATION OF A TRAILER

PROCÉDÉ DE STABILISATION DIRECTIONNELLE D'UNE REMORQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.04.2019 DE 102019205156**

(43) Veröffentlichungstag der Anmeldung:
**16.02.2022 Patentblatt 2022/07**

(73) Patentinhaber: **Volkswagen Aktiengesellschaft 38440 Wolfsburg (DE)**

(72) Erfinder: **WITTE, Bastian 38179 Groß Schwülper (DE)**

(56) Entgegenhaltungen:
| | |
|---|---|
| WO-A1-93/07023 | DE-A1- 102009 032 754 |
| DE-A1- 102016 204 090 | DE-U1- 202005 020 065 |
| DE-U1- 202009 005 185 | US-A1- 2013 079 979 |
| US-A1- 2015 051 795 | |

(52) Gemeinsame Patentklassifikation (CPC): (Forts.)
B60L 2240/463; B60L 2260/26; Y02T 10/64;
Y02T 10/72

**Beschreibung**

Die Erfindung betrifft ein Verfahren zur Fahrstabilisierung eines Anhängers mit mindestens einer Antriebsachse nach dem unabhängigen Verfahrensanspruch und eine entsprechende Vorrichtung zur Fahrstabilisierung eines Anhängers nach dem unabhängigen Vorrichtungsanspruch.

Vorrichtungen zur Fahrstabilisierung von Anhängern, die von einem führenden Zugfahrzeug gefahren werden, sind grundsätzlich bekannt, bspw. aus der Druckschrift DE 10 2009 032 754 A1. Dabei werden die Räder an einer Antriebsachse des Anhängers unabhängig voneinander derart angetrieben, um eine Stabilisierungswirkung zu erzielen. Dabei hat sich jedoch als Nachteil herausgestellt, dass bei der Erzeugung der Stabilisierungswirkung unterschiedliche Fahrsituationen beim Führen des Anhängers durch das Zugfahrzeug nicht beachtet werden. Weitere bekannte Vorrichtungen mit Anhängern sind aus den Schriften WO 93/07023 A1, DE 10 2009 032 754 A1, DE 20 2005 020065 U1 und DE 10 2016 204090 A1 entnehmbar.

Die Aufgabe der Erfindung ist es daher, ein verbessertes Verfahren zur Fahrstabilisierung eines Anhängers bereitzustellen. Insbesondere ist es die Aufgabe der Erfindung, ein verbessertes Verfahren zur Fahrstabilisierung eines Anhängers zur Verfügung zu stellen, welches zuverlässig, effizient und stabil ausgeführt und welches flexibel und zielgerichtet an unterschiedliche Fahrsituationen beim Führen des Anhängers angepasst werden kann. Zudem ist es die Aufgabe der Erfindung, eine entsprechende Vorrichtung zur Fahrstabilisierung eines Anhängers bereitzustellen.

Die erfindungsgemäße Aufgabe wird gelöst durch ein verbessertes Verfahren zur Fahrstabilisierung eines Anhängers mit den Merkmalen des unabhängigen Verfahrensanspruches, insbesondere aus dem kennzeichnenden Teil, und durch eine verbesserte Vorrichtung zur Fahrstabilisierung eines Anhängers mit den Merkmalen des unabhängigen Vorrichtungsanspruches, insbesondere aus dem kennzeichnenden Teil. In den abhängigen Ansprüchen sind bevorzugte Weiterbildungen der Erfindung aufgeführt. Merkmale, die zu den einzelnen Erfindungsaspekten offenbart werden, können in der Weise miteinander kombiniert werden, dass bzgl. der Offenbarung zu den Erfindungsaspekten der Erfindung stets wechselseitig Bezug genommen wird bzw. werden kann.

Gemäß einem Aspekt der Erfindung wird zur Lösung der erfindungsgemäßen Aufgabe ein Verfahren zur Fahrstabilisierung eines Anhängers vorgeschlagen, aufweisend: mindestens eine Antriebsachse (d. h. angetriebene Achse) mit zwei Rädern, wobei für jedes Rad jeweils ein elektrischer Antrieb vorgesehen ist, und mindestens eine Steuereinheit (mit einer gemeinsamen Steuervorrichtung für die Räder oder zwei separaten Steuervorrichtungen für die Räder) zum separaten Ansteuern der elektrischen Antriebe, um auf die Räder radindividuelle Drehmomente bereitzustellen und eine Stabilisierungswirkung zu erzielen. Hierzu weist das erfindungsgemäße Verfahren folgende Schritte auf:

1) Ermitteln eines Betriebszustandes des Anhängers,

2) Bereitstellen der radindividuellen Drehmomente auf die Räder in Abhängigkeit von dem ermittelten Betriebszustand des Anhängers, um insbesondere die Stabilisierungswirkung an den ermittelten Betriebszustand des Anhängers anzupassen.

Ein Betriebszustand im Sinne der Erfindung kann eine bestimmte Fahrsituation beim Führen des Anhängers durch ein Zugfahrzeug mit bestimmten Betriebsparametern des Zugfahrzeuges und/oder des Anhängers bedeuten. Ein Betriebszustand im Sinne der Erfindung kann folgende Fahrsituationen umfassen: Geradeausfahren, Lenken, Rangieren (bspw. zum Einparken oder Ausparken) usw. Als Betriebsparameter des Zugfahrzeuges können folgende Parameter berücksichtigt werden: Geschwindigkeit, Lenkradwinkel, Drehzahl der Zugfahrzeugräder, Radstand der Zugfahrzeugräder usw. Als Betriebsparameter des Anhängers können folgende Parameter berücksichtigt werden: Geschwindigkeit, Drehzahl der Räder, Radstand usw. Als Betriebsparameter des Gespanns können folgende Parameter berücksichtigt werden: Knickwinkel usw.

Unter einer Stabilisierungswirkung im Sinne der Erfindung kann eine Drehzahlangleichung zwischen den Rädern an der Antriebsachse des Anhängers verstanden werden.

Der Erfindungsgedanke liegt dabei darin, dass eine betriebspunktabhängige Stabilisierungswirkung mit radindividuellen, d. h. separat oder getrennt voneinander ansteuerbaren, elektrischen Antrieben bereitgestellt wird. Somit kann ein Verfahren zur Fahrstabilisierung eines Anhängers ermöglicht werden, welches flexibel und zielgerichtet an unterschiedliche Fahrsituationen beim Führen des Anhängers angepasst werden kann. Dabei werden die Drehzahlen vom rechten und linken Rad miteinander verglichen und in Abhängigkeit von dem ermittelten Betriebszustand des Anhängers eingestellt, um die Stabilisierungswirkung an den ermittelten Betriebszustand des Anhängers anzupassen und somit eine betriebspunktabhängige Stabilisierungswirkung zu erzielen.

Dem schneller drehenden Rad soll grundsätzlich ein bremsendes Zusatzmoment und dem langsamer drehenden Rad ein antreibendes Zusatzmoment aufgeprägt werden. Erfindungsgemäß wird jedoch der aktuelle Betriebszustand des Anhängers berücksichtigt, um ggf. ein Lenk- und/oder Rangiermanöver des Zugfahrzeuges, insbesondere bei niedrigen Geschwindigkeiten, nicht zu stören. Wiederum ist es denkbar, dass mit steigender Fahrgeschwindigkeit eine zunehmende Stabilisierungswirkung bereitgestellt werden kann, um ein Auspendeln und/oder Schlingern des Anhängers, insbesondere bei hohen Geschwindigkeiten, zuverlässig zu verhindern.

Zum Ausführen des erfindungsgemäßen Verfahrens kann die mindestens eine Steuereinheit vorgesehen sein, die vorzugsweise unabhängig von einem Steuergerät des Zugfahrzeuges bereitgestellt werden kann. Dabei ist es denkbar, dass die Steuereinheit für beide radindividuelle, elektrische Antriebe eine gemeinsame Steuervorrichtung oder zwei separate Steuervorrichtungen aufweisen kann, die über eine Signalkommunikation miteinander in Verbindung stehen können.

Im Rahmen der Erfindung ist es weiterhin denkbar, dass die radindividuellen, elektrischen Antriebe nur zum Bereitstellen der Stabilisierungswirkung ausgelegt sein können. Zudem ist es denkbar, dass die radindividuellen, elektrischen Antriebe zum Bereitstellen eines Antriebsmomentes (Antreiben des Anhängers und Überwindung der Fahrwiderstände) und zum Bereitstellen von radindividuellen stabilisierenden Zusatzmomenten (betriebspunktabhängige Stabilisierungswirkung) an die Räder ausgelegt sein können. Die Zusatzmomente können dabei positiv oder negativ sein und zum eigentlichen Antriebsmoment hinzuaddiert werden.

Als radindividuelle, elektrische Antriebe können:

- aufbaufeste Motoren mit Gelenkwellen zu den Rädern,
- Motoren an oder innerhalb der Achse (sog. radnahe Motoren), oder
- Radnabenantriebe

verwendet werden.

Ferner kann die Erfindung bei einem Verfahren zur Fahrstabilisierung eines Anhängers vorsehen, dass im Schritt 1) die Drehzahlen der Räder des Anhängers berücksichtigt werden, wobei auf ein Antriebsmoment eines schneller drehenden Rades ein bremsendes Zusatzmoment und auf ein Antriebsmoment eines langsamer drehenden Rades ein antreibendes Zusatzmoment aufgeprägt werden. Mithilfe von Drehzahlen der Räder kann ein Vergleich durchgeführt werden, um zu bestimmen, ob ein Rad schneller dreht als das andere, was ein Anzeichen für eine erforderliche Drehzahlangleichung sein kann. Dabei ist es denkbar, dass die Drehzahlen der Räder aus einer Kommutierung der elektrischen Antriebe ermittelt werden oder unmittelbar an den Rädern sensiert werden. Zur Ermittlung der Drehzahlen der Räder aus einer Kommutierung der elektrischen Antriebe ist lediglich eine Rechenleistung, ohne zusätzliche mechanische Komponenten, erforderlich. Zum Sensieren der Drehzahlen an den Rädern sind zwar Sensoren, bspw. Drehzahlgeber, erforderlich, dadurch kann jedoch der Rechenaufwand zum Durchführen des erfindungsgemäßen Verfahrens reduziert werden.

Weiterhin kann die Erfindung bei einem Verfahren zur Fahrstabilisierung eines Anhängers vorsehen, dass im Schritt 1) eine Geschwindigkeit des Anhängers berücksichtigt wird. Die Geschwindigkeit des Anhängers ist ein wichtiger Betriebsparameter, der zur Bestimmung der aktuellen Fahrsituation beim Führen des Anhängers durch ein Zugfahrzeug dienen kann.

Des Weiteren kann die Erfindung bei einem Verfahren zur Fahrstabilisierung eines Anhängers vorsehen, dass im Schritt 1) ein Schwellenwert für eine Geschwindigkeit des Anhängers berücksichtigt wird. Mithilfe des Schwellenwertes, z. B. 20 km/h, kann einfach festgelegt werden, wann bei niedrigen Fahrgeschwindigkeiten keine stabilisierende Wirkung an den Rädern erforderlich ist, damit der Anhänger ungestört rangiert werden kann.

Zudem kann die Erfindung bei einem Verfahren zur Fahrstabilisierung eines Anhängers vorsehen, dass im Schritt 1) zwischen mindestens zwei verschiedenen Betriebszuständen des Anhängers unterschieden wird:

    i) Rangieren des Anhängers bei einer Geschwindigkeit des Anhängers unterhalb eines Schwellenwerts,

    ii) Fahren des Anhängers bei einer Geschwindigkeit des Anhängers oberhalb des Schwellenwerts.

Beim Rangieren des Anhängers soll der Eingriff in die Ansteuerung der Räder möglichst vermieden werden. Beim Fahren des Anhängers soll wiederum eine, ggf. geschwindigkeitsabhängige, Stabilisierungswirkung erfolgen. Mithin können unterschiedliche Strategien für die Stabilisierungswirkung des Anhängers in Abhängigkeit von dem Schwellenwert für die Geschwindigkeit des Anhängers bereitgestellt werden, um unterschiedliche Fahrsituationen beim Führen des Anhängers durch das Zugfahrzeug flexibel berücksichtigen zu können.

Außerdem kann die Erfindung bei einem Verfahren zur Fahrstabilisierung eines Anhängers vorsehen, dass im Schritt 2) eine Geschwindigkeit des Anhängers berücksichtigt wird, wenn im Schritt 1) ein Fahren des Anhängers als Betriebszustand des Anhängers ermittelt wurde. Somit können für unterschiedliche Geschwindigkeiten des Anhängers angepasste Strategien für die Stabilisierungswirkung des Anhängers bereitgestellt werden.

Ferner kann die Erfindung bei einem Verfahren zur Fahrstabilisierung eines Anhängers vorsehen, dass im Schritt 2) die Stabilisierungswirkung mit einer steigenden Geschwindigkeit des Anhängers, insbesondere proportional oder überproportional (z. B. quadratisch, exponentiell), erhöht wird, wenn im Schritt 1) ein Fahren des Anhängers als Betriebszustand des Anhängers ermittelt wurde. Auf diese Weise kann einem Auspendeln und/oder Schlingern des Anhängers bei hohen Geschwindigkeiten effizient entgegengewirkt werden.

Weiterhin kann die Erfindung bei einem Verfahren zur Fahrstabilisierung eines Anhängers vorsehen, dass im Schritt 2) ein Lenkmanöver eines Zugfahrzeuges des Anhängers berücksichtigt wird, wenn im Schritt 1) ein Fahren des Anhängers als Betriebszustand des Anhängers ermittelt wurde. Somit kann ermöglicht werden, dass ein Lenkmanöver durch die Stabilisierungswirkung nicht gestört wird. Dabei ist es denkbar, dass ein Lenkmanöver des Zugfahrzeuges folgendermaßen ermitteln wird. Am Zugfahrzeug können ein Lenkwinkel der Vorderräder (bspw. aus dem Lenkradwinkel und der bekannten Lenkübersetzung), Fahrgeschwindigkeit und/oder Radstand ermittelt werden. Daraus kann der Kurvenradius oder dessen Kehrwert, und/oder die Krümmung der Kurve, und somit unabhängig von Größe und Typ des Zugfahrzeugs das Lenkmanöver berechnet werden. Die Krümmung der Kurve kann der bevorzugte Wert sein, der vom Zugfahrzeug an den Anhänger übertragen werden sollte. Abhängig von dieser Krümmung kann ein Korrekturwert für eine akzeptable Drehzahldifferenz der Anhängerräder berechnet werden, sodass Kurven ohne Gegenwirkung der Stabilisierungswirkung gefahren werden können.

Des Weiteren sieht die Erfindung bei einem Verfahren zur Fahrstabilisierung eines Anhängers vor, dass im Schritt 2) ein Lenkmanöver eines Zugfahrzeuges des Anhängers bei der Berechnung der Stabilisierungswirkung in Form eines Korrekturvektors berücksichtigt wird, wenn im Schritt 1) ein Fahren des Anhängers als Betriebszustand des Anhängers ermittelt wurde. So ist es z. B. denkbar, dass, wenn bspw. eine Kurvenfahrt als Lenkmanöver geplant ist, die Stabilisierungswirkung um den Korrekturwert angepasst, bspw. reduziert, wird, die der Kurvenfahrt entspricht. Auf diese Weise kann ermöglicht werden, dass unterschiedliche Drehzahlwerte an den Rädern, die für das Lenkmanöver erforderlich sind, erlaubt werden und nur die Drehzahlunterschiede darüber hinaus ausgeglichen werden.

Außerdem ist es denkbar, dass der Korrekturvektor in Abhängigkeit von mindestens einem der folgenden Parameter des Zugfahrzeuges und/oder des Lenkmanövers berechnet wird: ein Lenkwinkel, Radstand, Kurvenradius und/oder eine Kurvenkrümmung. Die Kurvenkrümmung ist der bevorzugte Wert bei der Berechnung eines möglichst korrekten Korrekturvektors. Dieser Wert ist vorteilhafterweise unabhängig vom Zugfahrzeug und seinen Abmessungen, von Merkmalen der Lenkübersetzung usw. Zudem gibt es keine Unendlichkeitswerte wie beim Kurvenradius während einer Geradeausfahrt.

Vorteilhafterweise ist es denkbar, dass ein Lenkwinkel, Radstand, Kurvenradius und/oder eine Kurvenkrümmung über ein Datenbussystem, z. B. einen CAN-Bus, vom Zugfahrzeug an den Anhänger übertragen werden.

Zudem kann die Erfindung bei einem Verfahren zur Fahrstabilisierung eines Anhängers vorsehen, dass im Schritt 2) keine Stabilisierungswirkung bereitgestellt wird, wenn im Schritt 1) ein Rangieren des Anhängers als Betriebszustand des Anhängers ermittelt wurde. Somit kann sichergestellt werden, dass der Anhänger ungestört rangiert werden kann.

Gemäß einem weiteren Aspekt der Erfindung wird zur Lösung der erfindungsgemäßen Aufgabe eine Vorrichtung zur Fahrstabilisierung eines Anhängers vorgeschlagen, aufweisend: mindestens eine Antriebsachse mit zwei Rädern, wobei für jedes Rad jeweils ein elektrischer Antrieb vorgesehen ist, und eine Steuereinheit zum separaten Ansteuern der elektrischen Antriebe, um auf die Räder radindividuelle Drehmomente bereitzustellen und eine Stabilisierungswirkung zu erzielen.

Erfindungsgemäß ist die Steuereinheit dazu ausgeführt, einen Betriebszustand des Anhängers zu ermitteln und radindividuelle Drehmomente auf die Räder in Abhängigkeit von dem ermittelten Betriebszustand des Anhängers bereitzustellen, um insbesondere die Stabilisierungswirkung an den ermittelten Betriebszustand des Anhängers anzupassen. Mithilfe der erfindungsgemäßen Vorrichtung werden die gleichen Vorteile erreicht, die oben im Zusammenhang mit dem erfindungsgemäßen Verfahren beschrieben wurden. Auf diese Vorteile wird vorliegend vollumfänglich Bezug genommen.

Vorteilhafterweise ist die Steuereinheit speziell dazu ausgeführt, ein Verfahren auszuführen, welches wie oben beschrieben durchgeführt werden kann.

Außerdem ist es bei einer Vorrichtung zur Fahrstabilisierung eines Anhängers im Rahmen der Erfindung denkbar, dass die Steuereinheit unabhängig von einem Steuergerät eines Zugfahrzeuges ausgeführt ist. Somit kann eine Vorrichtung zur Fahrstabilisierung eines Anhängers unabhängig von dem Zugfahrzeug bereitgestellt werden.

Fig. 1 einen möglichen Aufbau einer Vorrichtung zur Fahrstabilisierung eines Anhängers im Sinne der Erfindung und

Fig. 2 einen schematischen Ablauf eines Verfahrens zur Fahrstabilisierung eines Anhängers im Sinne der Erfindung.

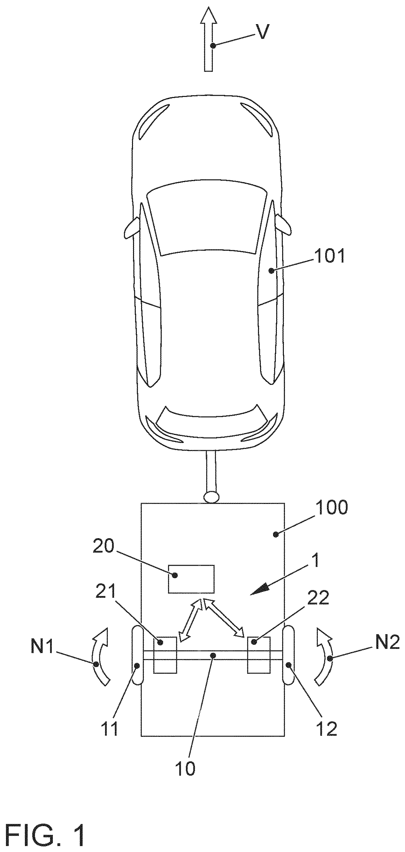

Die Figur 1 zeigt eine beispielhafte Vorrichtung 1 zur Fahrstabilisierung eines Anhängers 100 im Sinne der Erfindung. Die Vorrichtung 1 umfasst dabei mindestens eine Antriebsachse 10 mit zwei Rädern 11, 12, wobei für jedes Rad 11, 12 jeweils ein elektrischer Antrieb 21, 22 vorgesehen ist, und eine Steuereinheit 20 (mit einer gemeinsamen Steuervorrichtung für die Räder 11, 12 oder zwei separaten Steuervorrichtungen für die Räder 11, 12) zum separaten Ansteuern der elektrischen Antriebe 21, 22, um auf die Räder 11, 12 radindividuelle Drehmomente M1, M2 bereitzustellen und eine Stabilisierungswirkung M zu erzielen.

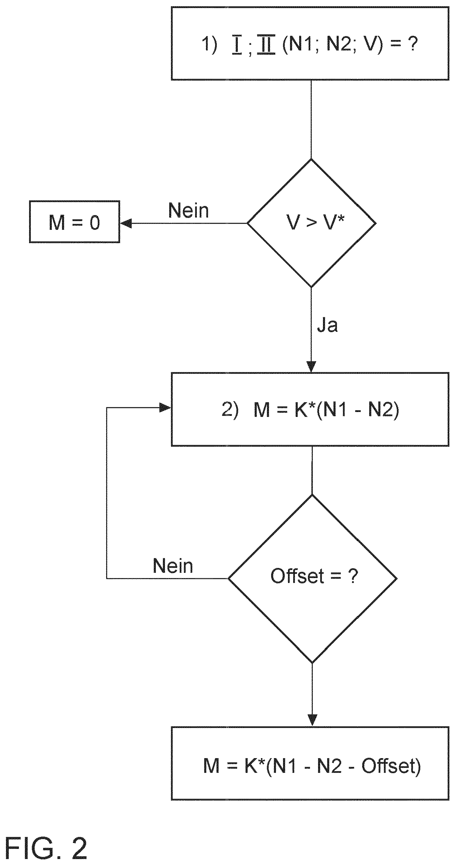

Die Figur 2 soll zur Erläuterung eines erfindungsgemäßen Verfahrens dienen, welches folgende Schritte aufweist:

1) Ermitteln eines Betriebszustandes I, II des Anhängers 100,

2) Bereitstellen der radindividuellen Drehmomente

M1, M2 auf die Räder 11, 12 in Abhängigkeit von dem ermittelten Betriebszustand I, II des Anhängers 100, um insbesondere die Stabilisierungswirkung M an den ermittelten Betriebszustand I, II des Anhängers 100 anzupassen.

Erfindungsgemäß wird die Stabilisierungswirkung M, bspw. in Form einer Drehzahlangleichung zwischen den Rädern 11, 12 mithilfe der radindividuellen, elektrischen Antriebe 21, 22 in Abhängigkeit von dem ermittelten Betriebszustand I, II des Anhängers 100 angepasst.

Der Betriebszustand I, II des Anhängers 100 kann vorteilhafterweise die aktuelle Fahrsituation beim Führen des Anhängers 100 durch ein Zugfahrzeug 101 unter Berücksichtigung bestimmter Betriebsparametern sowohl des Zugfahrzeuges 101 als auch des Anhängers 100 abbilden. Ein Betriebszustand I, II des Anhängers 100 im Sinne der Erfindung kann folgende Fahrsituationen umfassen: Geradeausfahren, Lenken, Rangieren (bspw. zum Einparken oder Ausparken) usw. Als Betriebsparameter des Zugfahrzeuges 101 sind folgende Parameter denkbar: Geschwindigkeit V, Lenkradwinkel, Kurvenradius, Krümmung, Drehzahl der Zugfahrzeugräder, Radstand der Zugfahrzeugräder usw. Als Betriebsparameter des Anhängers 100 können folgende Parameter berücksichtigt werden: Geschwindigkeit V, Drehzahl N1, N2 der Räder 11, 12, Radstand usw. Als Betriebsparameter des Gespanns 101 + 100 können folgende Parameter berücksichtigt werden: Knickwinkel zwischen Zugfahrzeug 101 und Anhänger 100.

Durch die Berücksichtigung des Betriebszustandes I, II des Anhängers 100 können unterschiedliche Fahrsituationen beim Führen des Anhängers 100 durch das Zugfahrzeug 101 bei der Berechnung der Stabilisierungswirkung M einfließen. Im Rahmen der Erfindung werden die Drehzahlen N1, N2 der Räder 11, 12 des Anhängers 100 miteinander verglichen und die Drehzahlangleichung in Abhängigkeit von dem ermittelten Betriebszustand I, II des Anhängers 100 korrigiert, um die betriebspunktabhängige Stabilisierungswirkung M zu erzielen.

Dem schneller drehenden Rad 11, 12 soll grundsätzlich ein bremsendes Zusatzmoment und dem langsamer drehenden Rad 11, 12 ein antreibendes Zusatzmoment aufgeprägt werden. Erfindungsgemäß wird der jeweilige Zusatzmoment in Abhängigkeit von dem ermittelten, d. h. aktuellen Betriebszustand I, II des Anhängers 100 korrigiert, um die Stabilisierungswirkung M an den ermittelten Betriebszustand I, II des Anhängers 100 anzupassen. Eine Korrektur der jeweiligen Zusatzmomente kann erfolgen, um ggf. ein Lenk- und/oder Rangiermanöver des Zugfahrzeuges 101, vorzugsweise bei niedrigen Geschwindigkeiten V, nicht zu stören. Wiederum ist es denkbar, dass mit steigender Fahrgeschwindigkeit V eine zunehmende Stabilisierungswirkung M zwischen den Rädern 11, 12 bereitgestellt werden kann, um ein Auspendeln und/oder Schlingern des Anhängers 100, vorzugsweise bei hohen Geschwindigkeiten V, zuverlässig zu verhindern.

Die betriebspunktabhängige Stabilisierungswirkung M wird durch die mindestens eine Steuereinheit 20 berechnet und durch eine entsprechende Ansteuerung der radindividuellen, elektrischen Antriebe 21, 22 eingeleitet. Die mindestens eine Steuereinheit 20 kann unabhängig von einem Steuergerät des Zugfahrzeuges 101 bereitgestellt werden. Dabei ist es denkbar, dass die Steuereinheit 20 für beide radindividuelle, elektrische Antriebe 21, 22 eine gemeinsame Steuervorrichtung oder zwei separate Steuervorrichtungen aufweisen kann, die über eine Signalkommunikation miteinander in Verbindung stehen können. In der Figur 1 ist lediglich beispielhaft eine gemeinsame Steuervorrichtung gezeigt.

Vorteilhafterweise können die radindividuellen, elektrischen Antriebe 21, 22 zum Bereitstellen eines Antriebsmomentes (Antreiben des Anhängers 100, Überwindung der Fahrwiderstände) und zum Bereitstellen von radindividuellen stabilisierenden Zusatzmomenten (betriebspunktabhängige Stabilisierungswirkung M bzw. Drehzahlangleichung) an die Räder 11, 12 ausgelegt sein. Die Zusatzmomente können dabei positiv oder negativ sein und zum eigentlichen Antriebsmoment hinzuaddiert werden.

Als radindividuelle, elektrische Antriebe 21, 22 sind:

- aufbaufeste Motoren mit Gelenkwellen zu den Rädern,
- Motoren an oder innerhalb der Achse 10 des Anhängers, oder
- Radnabenantriebe in den Rädern 11, 12

denkbar.

Wie es die Figur 2 andeutet, kann im Schritt 1) ein Schwellenwert V*, z. B. 20 km/h, für eine Geschwindigkeit V des Anhängers 100 berücksichtigt werden. In Abhängigkeit von dem Schwellenwert V* kann im Schritt 1) zwischen mindestens zwei verschiedenen Betriebszuständen I, II des Anhängers 100 unterschieden werden:

i) Rangieren I des Anhängers 100 bei einer Geschwindigkeit V des Anhängers 100 unterhalb des Schwellenwerts V* (incl. Rückwärtsfahrt),

ii) Fahren II des Anhängers 100 bei einer Geschwindigkeit V des Anhängers 100 oberhalb des Schwellenwerts V*.

Die Geschwindigkeit V des Anhängers 100 kann dabei z. B. als Mittelwert der Raddrehzahlen der Räder 11 und 12 ermittelt werden.

Beim Rangieren I des Anhängers 100 unterhalb des Schwellenwerts V* (d.h. auch bei Rückwärtsfahrt) soll der Eingriff in die Ansteuerung der Räder 11, 12 möglichst vermieden werden:

$$M = 0.$$

Beim Fahren II des Anhängers 100 soll wiederum eine Stabilisierungswirkung M erfolgen:

$$M = K(V) * (N1 - N2).$$

Im Schritt 2) ist es weiterhin denkbar, dass die Geschwindigkeit V des Anhängers 100 berücksichtigt wird, wenn im Schritt 1) ein Fahren II des Anhängers 100 als Betriebszustand I, II des Anhängers 100 ermittelt wurde. Dabei kann die Stabilisierungswirkung M mit einer steigenden Geschwindigkeit V des Anhängers 100, erhöht werden. Wie oben gezeigt, kann hierzu ein, vorzugsweise geschwindigkeitsabhängiger, Faktor K vorgesehen werden. Bei Simulationsuntersuchungen hat sich herausgestellt, dass eine Abhängigkeit vom Quadrat der Geschwindigkeit V gute Ergebnisse aufzeigt.

$$M = K(V^2) * (N1 - N2)$$

Weiterhin kann im Schritt 2) ein Lenkmanöver eines Zugfahrzeuges 101 des Anhängers 100 berücksichtigt werden, wenn im Schritt 1) ein Fahren II des Anhängers 100 als Betriebszustand I, II des Anhängers 100 ermittelt wurde. Dabei kann das Lenkmanöver des Zugfahrzeuges 101 des Anhängers 100 bei der Berechnung der Stabilisierungswirkung M in Form eines Korrekturvektors Offset berücksichtigt werden.:

$$M = K(V) * (N1 - N2 - Offset).$$

Somit können unterschiedliche Drehzahlwerte N1, N2 an den Rädern 11, 12, die für das Lenkmanöver erforderlich sind, erlaubt werden und nur die Drehzahlunterschiede darüber hinaus ausgeglichen werden. Dabei ist der Korrekturvektor Offset eine Funktion des zu befahrenden Kurvenradius bzw. der Krümmung.

Bevorzugt können Betriebsparameter des Zugfahrzeuges 101 (wie z. B. Lenkwinkel Kurvenradius oder Krümmung) über ein Datenbussystem, z. B. ein CAN-Bus, an den Anhänger 100 übertragen werden.

Die voranstehende Beschreibung der Figuren beschreibt die vorliegende Erfindung ausschließlich im Rahmen von Beispielen. Selbstverständlich können einzelne Merkmale der Ausführungsformen, sofern es technisch sinnvoll ist, frei miteinander kombiniert werden, ohne den Rahmen der Erfindung zu verlassen.

**Bezugszeichenliste**

1    Vorrichtung zur Fahrstabilisierung eines Anhängers

10    Antriebsachse
11    Rad
12    Rad

20    Steuereinheit
21    Antrieb
22    Antrieb

100    Anhänger
101    Zugfahrzeug

I, II    Betriebszustand
I    Rangieren
II    Fahren

K    Proportionalitätsfaktor

M    Stabilisierungswirkung

M1    Drehmoment
M2    Drehmoment

N1    Drehzahl
N2    Drehzahl

Offset    Korrekturvektor

V    Geschwindigkeit
V*    Schwellenwert

**Patentansprüche**

1.  Verfahren zur Fahrstabilisierung eines Anhängers (100), der Anhänger (100) aufweisend:

mindestens eine Antriebsachse (10) mit zwei Rädern (11, 12),
wobei für jedes Rad (11, 12) jeweils ein elektrischer Antrieb (21, 22) vorgesehen ist,
und eine Steuereinheit (20) zum separaten Ansteuern der elektrischen Antriebe (21, 22), um auf die Räder (11, 12) radindividuelle Drehmomente (M1, M2) bereitzustellen und eine Stabilisierungswirkung (M) zu erzielen, wobei
das Verfahren folgende Schritte aufweist:

1) Ermitteln eines Betriebszustandes (I, II) des Anhängers (100),
2) Bereitstellen der radindividuellen Drehmomente (M1, M2) auf die Räder (11, 12) in Abhängigkeit von dem ermittelten Betriebszustand (I, II) des Anhängers (100),

und **dadurch gekennzeichnet,**
**dass** im Schritt 2) ein Lenkmanöver eines Zugfahrzeuges (101) des Anhängers (100) bei der Berechnung der Stabilisierungswirkung (M) in Form eines Korrekturvektors (Offset) berücksichtigt wird, wenn im Schritt 1) ein Fahren (II) des Anhängers (100) als Betriebszustand (I, II) des Anhängers (100) ermittelt wurde.

2. Verfahren nach Anspruch 1,
   **dadurch gekennzeichnet,**
   **dass** im Schritt 1) die Drehzahlen (N1, N2) der Räder (11, 12) des Anhängers (100) berücksichtigt werden, wobei auf ein Antriebsmoment eines schneller drehenden Rades (11) ein bremsendes Zusatzmoment und auf ein Antriebsmoment eines langsamer drehenden Rades (12) ein antreibendes Zusatzmoment aufgeprägt werden.

3. Verfahren nach Anspruch 1 oder 2,
   **dadurch gekennzeichnet,**
   **dass** im Schritt 1) eine Geschwindigkeit (V) des Anhängers (100) berücksichtigt wird, und/oder dass im Schritt 1) ein Schwellenwert (V*) für eine Geschwindigkeit (V) des Anhängers (100) berücksichtigt wird.

4. Verfahren nach einem der vorhergehenden Ansprüche,
   **dadurch gekennzeichnet,**
   **dass** im Schritt 1) zwischen mindestens zwei verschiedenen Betriebszuständen (I, II) des Anhängers (100) unterschieden wird:

   i) Rangieren (I) des Anhängers (100) bei einer Geschwindigkeit (V) des Anhängers (100) unterhalb eines Schwellenwerts (V*),
   ii) Fahren (II) des Anhängers (100) bei einer Geschwindigkeit (V) des Anhängers (100) oberhalb des Schwellenwerts (V*).

5. Verfahren nach einem der vorhergehenden Ansprüche,
   **dadurch gekennzeichnet,**
   **dass** im Schritt 2) eine Geschwindigkeit (V) des Anhängers (100) berücksichtigt wird, wenn im Schritt 1) ein Fahren (II) des Anhängers (100) als Betriebszustand (I, II) des Anhängers (100) ermittelt wurde.

6. Verfahren nach einem der vorhergehenden Ansprüche,
   **dadurch gekennzeichnet,**
   **dass** im Schritt 2) die Stabilisierungswirkung (M) mit einer steigenden Geschwindigkeit (V) des Anhängers (100) erhöht wird, wenn im Schritt 1) ein Fahren (II) des Anhängers (100) als Betriebszustand (I, II) des Anhängers (100) ermittelt wurde.

7. Verfahren nach einem der vorhergehenden Ansprüche,
   **dadurch gekennzeichnet,**
   **dass** im Schritt 2) ein Lenkmanöver eines Zugfahrzeuges (101) des Anhängers (100) berücksichtigt wird, wenn im Schritt 1) ein Fahren (II) des Anhängers (100) als Betriebszustand (I, II) des Anhängers (100) ermittelt wurde.

8. Verfahren nach einem der vorhergehenden Ansprüche,
   **dadurch gekennzeichnet,**

   **dass** der Korrekturvektor (Offset) in Abhängigkeit von mindestens einem der folgenden Parameter des Zugfahrzeuges (101) und/oder des Lenkmanövers berechnet wird: ein Lenkwinkel, Radstand, Kurvenradius und/oder eine Kurvenkrümmung,
   und/oder dass ein Lenkwinkel, Radstand, Kurvenradius und/oder eine Kurvenkrümmung über ein Datenbussystem, z. B. einen CAN-Bus, vom Zugfahrzeug (101) an den Anhänger (100) übertragen werden.

9. Verfahren nach einem der vorhergehenden Ansprüche,
   **dadurch gekennzeichnet,**
   **dass** im Schritt 2) keine Stabilisierungswirkung (M) bereitgestellt wird, wenn im Schritt 1) ein Rangieren (I) des Anhängers (100) als Betriebszustand (I, II) des Anhängers (100) ermittelt wurde.

10. Vorrichtung (1) zur Fahrstabilisierung eines Anhängers (100), der Anhänger (100) aufweisend:

    mindestens eine Antriebsachse (10) mit zwei Rädern (11, 12),
    wobei für jedes Rad (11, 12) jeweils ein elektrischer Antrieb (21, 22) vorgesehen ist,
    die Vorrichtung (1) aufweisend:

    eine Steuereinheit (20) zum separaten Ansteuern der elektrischen Antriebe (21, 22), um auf die Räder (11, 12) radindividuelle Drehmomente (M1, M2) bereitzustellen und eine Stabilisierungswirkung (M) zu erzielen,
    **dadurch gekennzeichnet,**
    **dass** die Steuereinheit (20) dazu ausgeführt ist, einen Betriebszustand (I, II) des Anhängers (100) zu ermitteln und radindividuelle Drehmomente (M1, M2) auf die Räder (11, 12) in Abhängigkeit von dem ermittelten Betriebszustand (I, II) des Anhängers (100) bereitzustellen,
    und **dass** die Steuereinheit (20) dazu ausgeführt ist, beim Bereitstellen der radindividuellen Drehmomente (M1, M2) auf die Räder (11, 12) ein Lenkmanöver eines Zugfahrzeuges (101) des Anhängers (100) bei der Berechnung der Stabilisierungswirkung (M) in Form eines Korrekturvektors (Offset) zu berücksichtigen,

wenn beim Ermitteln eines Betriebszustandes (I, II) des Anhängers (100) ein Fahren (II) des Anhängers (100) als Betriebszustand (I, II) des Anhängers (100) ermittelt wurde.

11. Vorrichtung (1) nach Anspruch 10, **dadurch gekennzeichnet,**

dass die Steuereinheit (20) dazu ausgeführt ist, ein Verfahren nach einem der vorhergehenden Ansprüche 1 bis 9 auszuführen, und/oder dass die Steuereinheit (20) unabhängig von einem Steuergerät eines Zugfahrzeuges (101) ausgeführt ist.

**Claims**

1. Method for driving stabilization of a trailer (100), the trailer (100) comprising:

at least one drive axle (10) with two wheels (11, 12), an electric drive (21, 22) being provided for each wheel (11, 12), and a control unit (20) for separately controlling the electric drives (21, 22) in order to provide wheel-specific torques (M1, M2) to the wheels (11, 12) and to achieve a stabilizing effect (M), wherein the method comprises the following steps:

1) determining an operating state (I, II) of the trailer (100), 2) providing the wheel-specific torques (M1, M2) to the wheels (11, 12) depending on the determined operating state (I, II) of the trailer (100),

and **characterized in that** in step 2) a steering maneuver of a towing vehicle (101) of the trailer (100) is taken into account in the calculation of the stabilizing effect (M) in the form of a correction vector (offset) if, in step 1), driving (II) of the trailer (100) was determined as the operating state (I, II) of the trailer (100).

2. Method according to claim 1, **characterized in that** in step 1) the rotational speeds (N1, N2) of the wheels (11, 12) of the trailer (100) are taken into account, a braking additional torque being applied to a drive torque of a faster rotating wheel (11), and a driving additional torque being applied to a drive torque of a slower rotating wheel (12).

3. Method according to claim 1 or 2, **characterized in that**

in step 1) a speed (V) of the trailer (100) is taken into account, **and/or in that** in step 1) a threshold value (V*) for a speed (V) of the trailer (100) is taken into account.

4. Method according to any of the preceding claims, **characterized in that** in step 1) a distinction is made between at least two different operating states (I, II) of the trailer (100):

i) maneuvering (I) the trailer (100) at a speed (V) of the trailer (100) below a threshold value (V*), ii) driving (II) the trailer (100) at a speed (V) of the trailer (100) above the threshold value (V*).

5. Method according to any of the preceding claims, **characterized in that** in step 2) a speed (V) of the trailer (100) is taken into account if in step 1) driving (II) the trailer (100) was determined as the operating state (I, II) of the trailer (100).

6. Method according to any of the preceding claims, **characterized in that** in step 2) the stabilizing effect (M) is increased with an increasing speed (V) of the trailer (100) if in step 1) driving (II) the trailer (100) was determined as the operating state (I, II) of the trailer (100).

7. Method according to any of the preceding claims, **characterized in that** in step 2) a steering maneuver of a towing vehicle (101) of the trailer (100) is taken into account if in step 1) driving (II) the trailer (100) was determined as the operating state (I, II) of the trailer (100).

8. Method according to any of the preceding claims, **characterized in that**

the correction vector (offset) is calculated depending on at least one of the following parameters of the towing vehicle (101) and/or of the steering maneuver: a steering angle, wheelbase, curve radius and/or a curve curvature, **and/or in that** a steering angle, wheelbase, curve radius and/or a curve curvature are transmitted from the towing vehicle (101) to the trailer (100) via a data bus system, e.g. a CAN bus.

9. Method according to any of the preceding claims, **characterized in that** in step 2) no stabilizing effect (M) is provided if in step 1) maneuvering (I) the trailer (100) was determined as the operating state (I, II) of the trailer (100).

**10.** Device (1) for driving stabilization of a trailer (100), the trailer (100) comprising:

> at least one drive axle (10) with two wheels (11, 12),
> an electric drive (21, 22) being provided for each wheel (11, 12),
> the device (1) comprising:

>> a control unit (20) for separately controlling the electric drives (21, 22) in order to provide wheel-specific torques (M1, M2) to the wheels (11, 12) and to achieve a stabilizing effect (M),
>> **characterized in that**
>> the control unit (20) is designed to determine an operating state (I, II) of the trailer (100) and to provide wheel-specific torques (M1, M2) to the wheels (11, 12) depending on the determined operating state (I, II) of the trailer (100),
>> **and in that** the control unit (20) is designed, when providing the wheel-specific torques (M1, M2) to the wheels (11, 12),
>> to take into account a steering maneuver of a towing vehicle (101) of the trailer (100) when calculating the stabilizing effect (M) in the form of a correction vector (offset),
>> if, when determining an operating state (I, II) of the trailer (100)
>> driving (II) the trailer (100) was determined as the operating state (I, II) of the trailer (100).

**11.** Device (1) according to claim 10,
**characterized in that**

> the control unit (20) is designed to carry out a method according to any of the preceding claims 1 to 9,
> **and/or in that** the control unit (20) is designed independently of a control device of a towing vehicle (101).

## Revendications

**1.** Procédé de stabilisation de conduite d'une remorque (100), la remorque (100) présentant :

> au moins un essieu moteur (10) comportant deux roues (11, 12),
> dans lequel un entraînement électrique (21, 22) est respectivement prévu pour chaque roue (11, 12),
> et une unité de commande (20) pour commander séparément les entraînements électriques (21, 22) afin de mettre à disposition sur les roues (11, 12) des couples (M1, M2) propres à chaque roue et d'obtenir un effet de stabilisation (M),
> dans lequel le procédé présente les étapes suivantes :

>> 1) établissement d'un état de fonctionnement (I, II) de la remorque (100),
>> 2) mise à disposition des couples (M1, M2) propres à chaque roue sur les roues (11, 12) en fonction de l'état de fonctionnement (I, II) établi de la remorque (100),

>> et **caractérisé en ce**
>> **qu'**à l'étape 2), une manœuvre de direction d'un véhicule tracteur (101) de la remorque (100) est prise en compte dans le calcul de l'effet de stabilisation (M) sous la forme d'un vecteur de correction (Offset), si à l'étape 1), une conduite (II) de la remorque (100) a été établie comme état de fonctionnement (I, II) de la remorque (100).

**2.** Procédé selon la revendication 1,
**caractérisé en ce**
**que** dans l'étape 1), les vitesses de rotation (N1, N2) des roues (11, 12) de la remorque (100) sont prises en compte, dans lequel un couple supplémentaire de freinage est appliqué à un couple d'entraînement d'une roue (11) tournant plus vite et un couple supplémentaire d'entraînement est appliqué à un couple d'entraînement d'une roue (12) tournant plus lentement.

**3.** Procédé selon la revendication 1 ou 2,
**caractérisé en ce**
**que**, à l'étape 1), une vitesse (V) de la remorque (100) est prise en compte, **et/ou en ce que,** à l'étape 1), une valeur seuil (V*) pour une vitesse (V) de la remorque (100) est prise en compte.

**4.** Procédé selon l'une des revendications précédentes,
**caractérisé en ce**
**que**, à l'étape 1), une distinction est faite entre au moins deux états de fonctionnement (I, II) différents de la remorque (100) :

> i) manœuvre (I) de la remorque (100) à une vitesse (V) de la remorque (100) inférieure à une valeur seuil (V*),
> ii) conduite (II) de la remorque (100) à une vitesse (V) de la remorque (100) supérieure à la valeur seuil (V*).

**5.** Procédé selon l'une des revendications précédentes,
**caractérisé en ce**
**que**, à l'étape 2), une vitesse (V) de la remorque (100) est prise en compte si, à l'étape 1), une conduite (II) de la remorque (100) a été établie comme état de fonctionnement (I, II) de la remorque (100).

6. Procédé selon l'une des revendications précédentes,
   **caractérisé en ce**
   **que**, à l'étape 2), l'effet de stabilisation (M) est augmenté avec une vitesse (V) croissante de la remorque (100), si à l'étape 1) une conduite (II) de la remorque (100) a été établie comme état de fonctionnement (I, II) de la remorque (100).

7. Procédé selon l'une des revendications précédentes,
   **caractérisé en ce**
   **que**, à l'étape 2), une manœuvre de direction d'un véhicule tracteur (101) de la remorque (100) est prise en compte si, à l'étape 1), une conduite (II) de la remorque (100) a été établie comme état de fonctionnement (I, II) de la remorque (100).

8. Procédé selon l'une des revendications précédentes,
   **caractérisé en ce**

   **que** le vecteur de correction (Offset) est calculé en fonction d'au moins un des paramètres suivants du véhicule tracteur (101) et/ou de la manœuvre de direction : un angle de direction, un empattement, un rayon de virage et/ou une courbure de virage,
   **et/ou qu'**un angle de direction, un empattement, un rayon de virage et/ou une courbure de virage sont transmis du véhicule tracteur (101) à la remorque (100) par l'intermédiaire d'un système de bus de données, par exemple un bus CAN.

9. Procédé selon l'une des revendications précédentes,
   **caractérisé en ce**
   **que**, à l'étape 2), aucun effet de stabilisation (M) n'est mis à disposition si, à l'étape 1), une manœuvre (I) de la remorque (100) a été établie comme état de fonctionnement (I, II) de la remorque (100).

10. Dispositif (1) de stabilisation de conduite d'une remorque (100), la remorque (100) présentant :

    au moins un essieu moteur (10) comportant deux roues (11, 12),
    dans lequel un entraînement électrique (21, 22) est respectivement prévu pour chaque roue (11, 12),
    le dispositif (1) présentant :

    une unité de commande (20) pour commander séparément les entraînements électriques (21, 22) afin de mettre à disposition sur les roues (11, 12) des couples (M1, M2) propres à chaque roue et d'obtenir un effet de stabilisation (M),
**caractérisé en ce**
**que** l'unité de commande (20) est conçue pour établir un état de fonctionnement (I, II) de la remorque (100) et pour mettre à disposition des couples (M1, M2) propres à chaque roue sur les roues (11, 12) en fonction de l'état de fonctionnement (I, II) établi de la remorque (100),
**et que** l'unité de commande (20) est conçue pour, lors de la mise à disposition des couples (M1, M2) propres à chaque roue sur les roues (11, 12)
prendre en compte une manœuvre de direction d'un véhicule tracteur (101) de la remorque (100) lors du calcul de l'effet de stabilisation (M) sous la forme d'un vecteur de correction (Offset),
si, lors de l'établissement d'un état de fonctionnement (I, II) de la remorque (100) une conduite (II) de la remorque (100) a été établie comme état de fonctionnement (I, II) de la remorque (100).

11. Dispositif (1) selon la revendication 10,
    **caractérisé en ce**

    **que** l'unité de commande (20) est conçue pour réaliser un procédé selon l'une des revendications précédentes 1 à 9,
    **et/ou que** l'unité de commande (20) est réalisée indépendamment d'un appareil de commande d'un véhicule tracteur (101).

FIG. 1

1) $\underline{I}$ ; $\underline{II}$ (N1; N2; V) = ?

M = 0 ← Nein ← V > V*

Ja

2) M = K*(N1 - N2)

Nein ← Offset = ?

M = K*(N1 - N2 - Offset)

FIG. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009032754 A1
- WO 9307023 A1
- DE 202005020065 U1
- DE 102016204090 A1